# EUROPEAN PATENT APPLICATION

(11) **EP 4 797 200 A1**
(43) Date of publication of application: **26.08.2026**
(21) Application number: 24790611.8
(22) Date of filing: 13.08.2024
(51) Int. Cl.: G06T 5/70

(54) **IMAGE ANALYSIS METHOD AND SYSTEM FOR DETERMINING INTRACELLULAR FLUCTUATIONS**

(30) Priority: 20.10.2023 ES 202330868
(71) Applicant: Consejo Superior de Investigaciones Científicas (CSIC), 28006 Madrid (ES)
(72) Inventor: CANO TORTAJADA, Álvaro, 28760 Tres Cantos Madrid (ES); TAMAYO DE MIGUEL, Javier, 28760 Tres Cantos Madrid (ES); RUZ MARTÍNEZ, José Jaime, 28760 Tres Cantos Madrid (ES); CALLEJA GÓMEZ, Montserrat, 28760 Tres Cantos Madrid (ES); PUERTO BELDA, Verónica, 28760 Tres Cantos (ES); MILLÁ PARDO, Carmen, 28760 Tres Cantos Madrid (ES); MONTEIRO KOSAKA, Priscila, 28760 Tres Cantos Madrid (ES); LOPEZ YUBERO, Marina Pilar, 28760 Tres Cantos Madrid (ES)
(74) Representative: Pons IP
(86) International application number: PCT/ES2024/070511
(87) International publication number: WO 2025/083299

(57) **Abstract**

The invention relates to an image analysis system and method for determining intracellular fluctuations in a physiological medium comprising a quantitative digital holographic microscope; an incubator that maintains a set of cells under optimal physiological conditions thereof, in which the reference substrate and regions of interest are defined; and a processing module configured to: obtain a set of time-lapse images; determine the substrate and measure and spatially average a signal on said substrate; define a set of regions of interest and temporally average the measured signal from said regions of interest; calculate the signal fluctuations; define noise fluctuations as a linear combination of average signals from a set of substrates; and iteratively calculate a corrected fluctuations value.

## Description

### OBJECT OF THE INVENTION

The present invention falls within the field of image analysis, more particularly, quantitative microscopy image analysis.

The invention relates to an image analysis method that allows intracellular fluctuations to be determined. The method of the invention allows noise coming from irregularities, tilts and vibrations, among others, to be eliminated.

The invention also relates to an image analysis system comprising a quantitative microscope and an incubator for accurately determining intracellular fluctuations under physiological conditions.

### BACKGROUND OF THE INVENTION

The state of the art has numerous devices and systems for image analysis.

Various solutions have also been found that allow noise in measured signals to be eliminated.

There are also multiple adaptive image correction algorithms based on correlation operations. These solutions relate to the technical field of computer vision, image processing and signal processing.

A well-known algorithm among the algorithms in the state of the art allows image processing technologies to be combined with cross-correlation operations. Thus, a noise autocorrelation matrix is calculated, the noise peak points are verified and correction of said noise is made. This algorithm allows for greater accuracy in image analysis, requires fewer processing resources, and does not require manual intervention.

However, no solution has been found in the state of the art that allows intracellular fluctuations to be accurately determined by eliminating noise sources pertaining to the use of quantitative digital microscopes.

### DESCRIPTION OF THE INVENTION

The invention relates to an image analysis method for determining intracellular fluctuations. In particular, it can be applied to the determination of intracellular fluctuations under physiological conditions characteristic of breast cancer cells.

The method of the invention comprises a step of obtaining a set of time-lapse images Δ*t,* which are identified with subscript "k", so that k=1, 2, *..., N_{seg}. N_{seg}* is the number of images obtained.

Once the images are obtained, one or more regions of the image are determined therein, which are defined as regions without cells, which we will define as substrates, preferably 3, and one or more regions of interest, defined as regions with cells. Preferably, to determine the substrate and the regions of interest in each image, mobile rigid masks located in the regions comprising cells are used.

Next, a signal from each pixel that makes up the substrate is measured and said signal is spatially averaged as follows: ${η}_{s} \left(k\right) ≡ {η}_{s} \left(kΔt\right)$ where *ηₛ*(*k*) is the spatial average of the signal corresponding to each substrate in each of the images, where each image represents an instant of time defined by (*kΔt*)*.*

Next, the measured signals from the regions of interest are temporally averaged (*x̅ᵢ̅ⱼ̅*).

Then, fluctuations of the measured signals over time (Δ*xᵢⱼ*(*k*)) is calculated as: $Δ {x}_{ij} \left(k\right) = {x}_{ij} \left(k\right) - \overline{{x}_{ij}}$ where *xᵢⱼ*(*k*) is the signal measured at each pixel of each image k.

Noise fluctuations can be defined as a linear combination of average signals from the substrates as follows: ${η}_{inc} \left(k\right) = {\sum }_{s = 1}^{{N}_{s}} {α}_{ij , s} {η}_{s} \left(k\right)$ where *Nₛ* is the number of substrates, *αᵢⱼ* are coefficients that modulate the amplitude of the fluctuations of each substrate present in each pixel.

Preferably, in one set of embodiments of the invention, the correlation of the elements of the image with the substrate s is calculated, which elements are as follows: ${\left({ρ}_{ij}\right)}_{s} = {\sum }_{k = 1}^{{N}_{seg}} Δ {x}_{ij} \left(k\right) {η}_{s} \left(k\right)$

Then, for each pixel *i,j* the following system of equations is solved numerically, obtaining the coefficients *αᵢⱼ*: ${\left({ρ}_{ij}\right)}_{s} = {\sum }_{m = 1}^{{N}_{s}} {α}_{ij , m} {\sum }_{k = 1}^{{N}_{seg}} {η}_{s} \left(k\right) {η}_{m} \left(k\right)$ where the coefficient m lists the substrates present, as does s, and *ηₘ*(*k*) is the spatial average of the substrate m.

To obtain the coefficients *αᵢⱼ,* the pseudoinverse matrix of the system of equations can be used.

Once the coefficients *αᵢⱼ* are obtained, the final noise-corrected fluctuations can be calculated as follows: ${η}_{ij} \left(k\right) = Δ {x}_{ij} \left(k\right) - {\sum }_{m = 1}^{{N}_{s}} {α}_{ij , m} {η}_{m} \left(k\right)$

Alternatively, the coefficients *αᵢⱼ* in the method of the invention can be approximated as: ${α}_{ij , s} \approx \frac{{\left({ρ}_{ij}\right)}_{s}}{{\left({ρ}_{s}\right)}_{s}}$ where (*ρₛ*)*ₛ* is the correlation of *ηₛ* with itself and is as follows: ${\left({ρ}_{s}\right)}_{s} = {\sum }_{k = 1}^{{N}_{seg}} {η}_{s} \left(k\right) {η}_{s} \left(k\right)$ and where (*ρᵢⱼ*)*ₛ* is the correlation of the elements of the image with the substrate s.

Next, a corrected fluctuations value (*ηᵢⱼ*(*k*)) can be iteratively calculated using the equation: ${\left({η}_{ij}\left(k\right)\right)}_{l + 1} \approx {\left(Δ{x}_{ij}\left(k\right)\right)}_{l} - {\sum }_{s = 1}^{{N}_{s}} \frac{{\left({\left({ρ}_{ij}\right)}_{s}\right)}_{l}}{{\left({ρ}_{s}\right)}_{s}} {η}_{s} \left(k\right)$ where I is a counter of the iteration that is iteratively calculated, and it preferably has a maximum value of 100 iterations.

**In** this step, the value of the term Δ*xᵢⱼ* is updated at each iteration as coinciding with the value of *ηᵢⱼ* in the previous iteration.

**In** some embodiments of the method of the invention, the noise fluctuations originates from tilt or vibrations that occur during imaging.

The method of the invention may further comprise a step, subsequent to the step of iteratively calculating a corrected fluctuations value, of calculating the correlation matrices with the substrates.

Subsequently, the method may also comprise a step of representing the average signals from the corrected fluctuations value. In this case, an average corrected fluctuations value (*η̅ᵢ̅ⱼ̅*) is calculated from the corrected fluctuations value calculated for each pixel

The present invention also relates to an image analysis system for determining intracellular fluctuations. The system of the invention comprises a quantitative microscope, preferably a digital microscope, and more preferably a digital holographic microscope, an incubator and a processing module connected to the digital microscope and configured to determine intracellular fluctuations by carrying out the steps of the method of the invention described.

The incubator is intended to maintain the optimal physiological conditions of the set of cells. Preferably, the microscope may comprise a cantilever support, with a supported end and an unsupported end, configured to support the incubator at its unsupported end. More preferably, the support may comprise a cantilever plate.

### DESCRIPTION OF THE DRAWINGS

As a complement to the description provided and for the purpose of helping to make the features of the invention more readily understandable, in accordance with a practical preferred exemplary embodiment thereof, said description is accompanied by a set of drawings which, by way of illustration and not limitation, represent the following:
Figure 1 shows a set of temporal images obtained by the system of the invention.
Figure 2 shows an example of one of the images obtained by the system of the invention.
Figure 3 shows an example of the logarithm of the quadratic sum of the spatial average of a set of series obtained with a conventional system.
Figure 4 shows an example of average signals from several substrates and a cell that are obtained with a conventional system.
Figure 5 shows an example of the representation of the correlation matrices of the substrates and the cell in figure 4.
Figure 6 shows an exemplary embodiment of the system of the invention.
Figure 7 shows an example of the representation of the correlation matrices of several substrates and a cell that are obtained with the system of the invention.
Figure 8 shows an example of average signals from the substrates and the cell in figure 7.
Figure 9 shows an example of the logarithm of the quadratic sum of the spatial average of a set of series obtained with the system of the invention.

### PREFERRED EMBODIMENT OF THE INVENTION

The main objective of the system and the method of the invention is to find observables related to stochastic intracellular fluctuations that characterise the different stages and/or malignancy of breast cancer.

The method of the invention relates to an image analysis system for determining intracellular fluctuations under physiological conditions.

In a preferred embodiment of the invention, the system comprises a digital holographic microscope (1); an incubator (2) responsible for housing a set of cells.

At least one, preferably three substrate regions, which comprise regions where there are no cells, and one or more regions of interest, which comprise regions where there are cells, are defined in the incubator (2).

The system of the invention also comprises a processing module connected to the quantitative digital microscope (1) that will be responsible for carrying out the image analysis method.

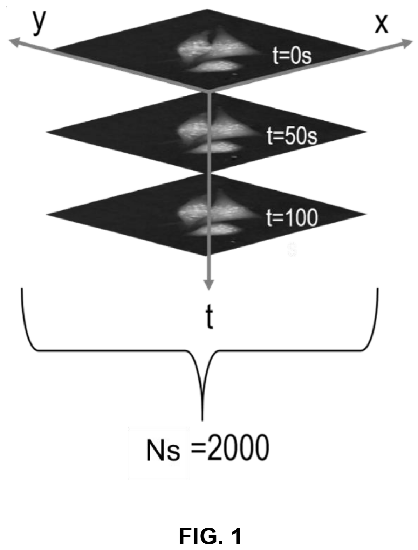

In this method, images are acquired for 100 seconds, as shown in figure 1, where a diagram of the image acquisition step can be seen. These images are acquired at intervals, Δ*t =* 0.05 *seconds,* resulting in a total of *N_{seg}* = 2000 images.

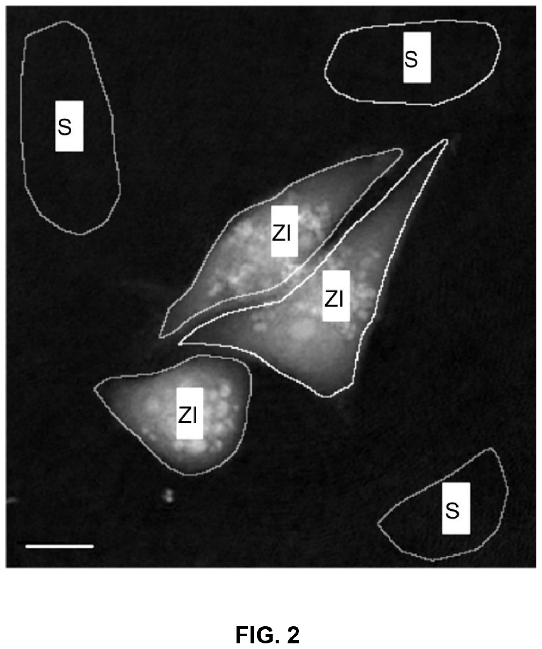

On these images, mobile rigid masks are applied in the regions of interest (ROI), so that the masks follow the cell, as shown in figure 2, where masks representing the regions of interest (ROI) of the image are shown.

Furthermore, to conduct a fluctuations study it is necessary to have references with which to compare. For this purpose, substrate regions (S) are determined, in this particular case, 3 regions: *Nₛ* = 3.

The signals from the substrates are then spatially averaged, resulting in a single time series.

The fluctuations of a signal is defined in the context of the invention as the way in which its mean value varies over time. Thus, fluctuations (Δ*xᵢⱼ*) is defined as: $Δ {x}_{ij} \left(k\right) = {x}_{ij} \left(k\right) - \overline{{x}_{ij}}$ where *xᵢⱼ*(*k*) is the signal measured at each pixel of each image k and (*x̅ᵢ̅ⱼ̅*) is the time average of this measured signal.

The sum of the square of this shift quantifies the fluctuations of a signal.

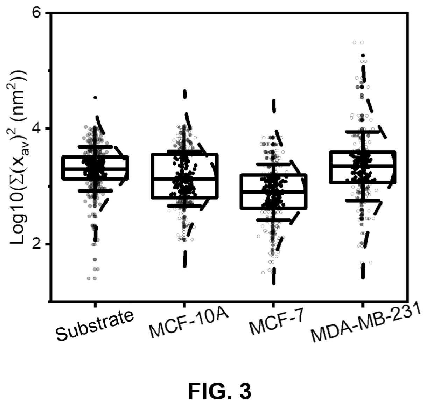

Figure 3 shows the distributions of the logarithm of the quadratic sum of the fluctuations for three cell lines and for the substrates. In this figure, the boxes represent the 25th and 75th percentiles of the distribution and the whiskers represent the standard deviation. The line is the mean value and the dotted line represents a fit to a normal distribution. The distributions were made with a number of measurements: ${n}_{\left\{substrate\right\}} = 315 , {n}_{\left\{MCF-10A\right\}} = 222 , {n}_{\left\{MCF-7\right\}} = 159 , {n}_{\left\{MDA\right\}} = 150 .$

Figure 3 shows that there are no noticeable differences in the amplitude of fluctuations between the distributions, which does not correspond to what was observed in experimental measures, where a greater amount of intracellular movement is clearly observed in the regions of interest than in the substrate. Furthermore, experimental measures have determined that the amount of intracellular movement scales with the malignancy of the cancer.

Since the fact that no noticeable differences in shape in the fluctuations of the average signals from cells and substrates does not correspond to the reality observed, the series obtained have been analysed in search of any artifact that is shielding the signal.

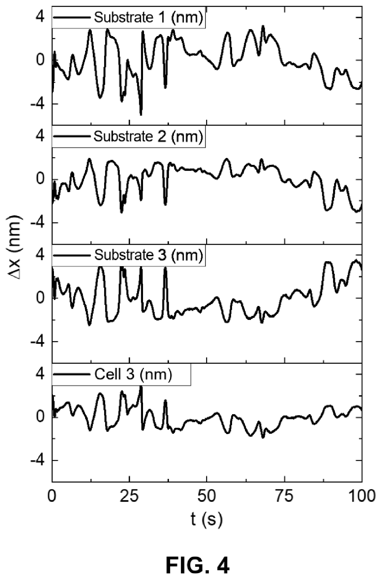

Figure 4 shows a representation of the average signals from the different substrates and cells. It is observed therein that there is a common background noise of different amplitude and sign for each of the signals.

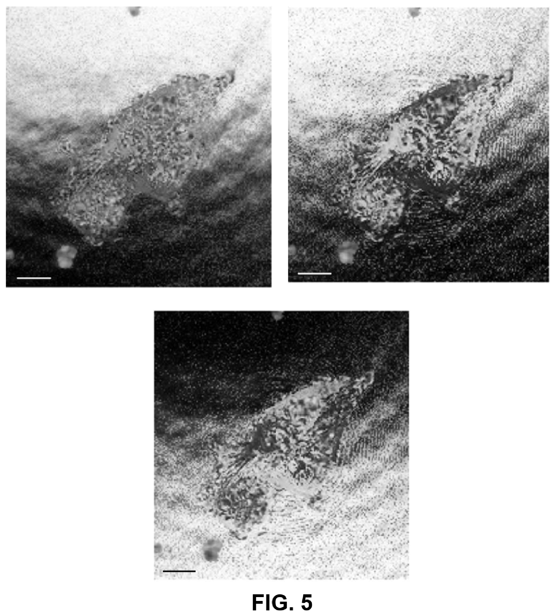

Figure 5 shows the representation of three correlation matrices calculated with the time series of each pixel and with each of the average signals from the substrates. In this figure, it can be seen that the noise has a tilted shape of the image, since in two of the substrates there is an opposite correlation to the other substrate.

One of the techniques used to analyse the series obtained is the cross-correlation of two signals f(t) and g(t), which is defined as: $\left(f∗g\right) \left(τ\right) = {\int }_{- ∞}^{∞} f \left(t+τ\right) g * \left(t\right) dt$ where *τ* is known as shift or lag. This function measures how similar two signals are based on the shift of one relative to the other.

Upon analysing the series in figure 3, it can be concluded that these series have a maximum correlation in *τ* = 0.

To eliminate the influence of noise that shields the measurements, three average discrete signals from three substrates *ηₛ*(*k*Δ*t*) are used, where the subscript s indicates the number of the substrate. For simplicity, since these are discrete signals, only the subscript k is used for the time representation of the series. Thus, the discrete expression of the average signal of the substrates is as follows: ${η}_{s} \left(k\right) ≡ {η}_{s} \left(kΔt\right) , s = 1 , 2 , 3 ; k = 1 , … , {N}_{seg}$

With this, the correlation matrix at *τ* = 0 between the matrix elements that make up the images, the fluctuations of the measured signal Δ*xᵢⱼ*(*k*)*,* and substrates can be defined as: ${\left({ρ}_{ij}\right)}_{s} = {\sum }_{k = 1}^{{N}_{seg}} Δ {x}_{ij} \left(k\right) {η}_{s} \left(k\right)$

To eliminate the artifact that shields the signal, the source of the same has been sought.

Tests have been carried out to determine the causative element. First, it was determined whether the cause was the use of an active optical table. Measurements were made with said table turned on and turned off. The result showed the same artifacts, so it was determined that this is not the cause.

Subsequently, it was analysed whether the cause was a flow of CO₂ and humidity generated inside the incubator (2), since said flow can generate changes in the refractive index of the medium that the laser passes through before entering the sample. Consequently, measurements were made with and without flow, maintaining the artifacts.

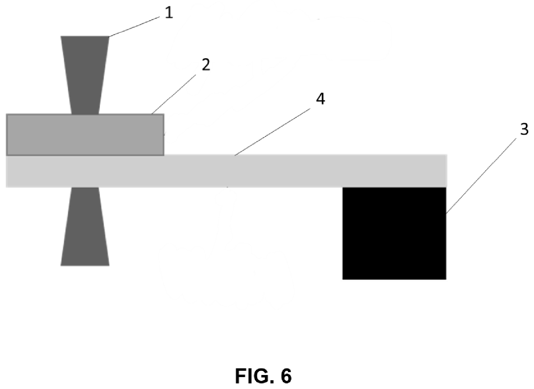

Measurements were then made without an incubator (2), and in this case it was observed that the artifacts disappeared. This result made it possible to conclude that the origin of the artifacts is that the incubator (2) is heavy and is placed on a cantilever plate (4) of the microscope (1), as shown in figure 6. This configuration generates vibrations, which affect the images obtained with the digital holographic microscope (DHM) (1).

This conclusion gave rise to an additional problem, where without the incubator (2), the measurements would lack the optimal biological conditions for the life of cells. Therefore, it is not possible to physically eliminate the origin of the artifacts, since it is not possible to measure without the same. For this reason, a method has been developed that is capable of eliminating the artifacts due to the tilt of the plate (4) by using a mathematical method.

In order to eliminate the artifacts present in the images for each of the pixels, a simplified fluctuations model has been developed.

The measured signal fluctuations value for each pixel is described as a sum of two independent fluctuations values as follows: $Δ {x}_{ij} \left(k\right) = {η}_{ij} \left(k\right) + {η}_{inc} \left(k\right)$ where *ηᵢⱼ* is the corrected fluctuations (without artifacts) at each pixel and *η_{inc}* is the fluctuations caused by the artifacts in image acquisition.

Based on the correlation matrices calculated in figure 3, it is determined that the term *η_{inc}* can be rewritten as a linear combination of the different average signals from the substrates, in this case from the 3 substrates, resulting in a fluctuations model as follows: $Δ {x}_{ij} \left(k\right) = {η}_{ij} \left(k\right) + {\sum }_{s = 1}^{{N}_{s}} {α}_{ij , s} {η}_{s} \left(k\right)$ where *αᵢⱼ* are coefficients that modulate the amplitude of the fluctuations of each substrate present in each pixel.

An expression for the elements of the correlation matrix with another substrate s' can be obtained from the developed model as follows: ${\left({ρ}_{ij}\right)}_{s ′} = {\sum }_{k = 1}^{{N}_{seg}} {η}_{ij} \left(k\right) {η}_{s ′} \left(k\right) + {\sum }_{k = 1}^{{N}_{seq}} {\sum }_{s = 1}^{{N}_{s}} {α}_{{ij}_{s} } {η}_{s} \left(k\right) {η}_{s ′} \left(k\right)$ where ${\sum }_{k = 1}^{{N}_{seq}} {η}_{ij} \left(k\right) {η}_{s ′} \left(k\right)$ corresponds to the correlation between the fluctuations in the regions of interest and the substrate s': *ηᵢⱼ* and *η_{s'}*. These elements are not correlated, so the result of this correlation is zero.

In a set of embodiments, the system of equations can be formed: ${\left({ρ}_{ij}\right)}_{s} = {\sum }_{m = 1}^{N} {α}_{ij , m} {\sum }_{k = 1}^{{N}_{seg}} {η}_{s} \left(k\right) {η}_{m} \left(k\right)$ where, like the parameter s, the coefficient m lists the substrates present.

This system of equations can be solved, obtaining the coefficients *αᵢⱼ,* using the pseudoinverse matrix of the system of equations.

Once the coefficients *αᵢⱼ* are obtained, the final noise-corrected fluctuations can be calculated as follows: ${η}_{ij} \left(k\right) = Δ {x}_{ij} \left(k\right) - {\sum }_{m = 1}^{{N}_{s}} {α}_{ij , m} {η}_{m} \left(k\right)$

In another set of embodiments, obtaining the corrected fluctuations value (*ηᵢⱼ*(*k*)) can be done by rewriting the term ${\sum }_{k = 1}^{{N}_{seg}} {\sum }_{s = 1}^{{N}_{s}} {α}_{ij , s} {η}_{s} \left(k\right) {η}_{s ′} \left(k\right)$ as a sum of two terms, corresponding to a case in which the substrate s is different from the substrate s' and another case in which both substrates coincide (s=s'), resulting in: ${\left({ρ}_{ij}\right)}_{s ′} = {\sum }_{k = 1}^{{N}_{seg}} {\sum }_{s \neq s ′}^{{N}_{s}} {α}_{ij , s} {η}_{s} \left(k\right) {η}_{s ′} \left(k\right) + {\sum }_{k = 1}^{{N}_{seg}} {α}_{ij , s} {η}_{s} \left(k\right) {η}_{s} \left(k\right)$

In this case, the term ${\sum }_{k = 1}^{{N}_{seg}} {η}_{s} \left(k\right) {η}_{s} \left(k\right)$ is the correlation of *ηₛ* with itself ((*ρₛ*)*ₛ*). This is known as autocorrelation and this term will always be greater than the cross-correlation with another function. Therefore, the resulting term can be approximated to the term corresponding to the case in which both substrates coincide (s=s'). Taking this into account, the elements of the correlation matrix are approximated as: ${\left({ρ}_{ij}\right)}_{s} \approx {α}_{ij , s} {\left({ρ}_{s}\right)}_{s} \to {α}_{ij , s} \approx \frac{{\left({ρ}_{ij}\right)}_{s}}{{\left({ρ}_{s}\right)}_{s}}$

Thus, an approximate expression of the coefficients *αᵢⱼ* can be obtained based on the cross-correlation between the signal from each of the pixels (Δ*xᵢⱼ*) and each of the substrates.

Therefore, the definition of the measured fluctuations value for each of the pixels as a sum of two fluctuationss, a corrected fluctuations value *(ηᵢⱼ*(*k*)) and a noise fluctuations value (*η_{inc}*(*k*)), results in: $Δ {x}_{ij} \left(k\right) \approx {η}_{ij} \left(k\right) + {\sum }_{s = 1}^{{N}_{s}} \frac{{\left({ρ}_{ij}\right)}_{s}}{{\left({ρ}_{s}\right)}_{s}} {η}_{s} \left(k\right)$

In this way, an approximate expression for the corrected fluctuations value *ηᵢⱼ*(*k*) can be obtained: ${η}_{ij} \left(k\right) \approx Δ {x}_{ij} \left(k\right) - {\sum }_{s = 1}^{{N}_{s}} \frac{{\left({ρ}_{ij}\right)}_{s}}{{\left({ρ}_{s}\right)}_{s}} {η}_{s} \left(k\right)$

This expression is approximate, so it is solved by an iterative process where Δ*xᵢⱼ* is updated at each iteration with the calculated value of *ηᵢⱼ.*

Therefore, the result of the developed fluctuations model is the iterative process of the expressions: ${\left({η}_{ij}\left(k\right)\right)}_{l + 1} \approx {\left(Δ{x}_{ij}\left(k\right)\right)}_{l} - {\sum }_{s = 1}^{{N}_{s}} \frac{{\left({\left({ρ}_{ij}\right)}_{s}\right)}_{l}}{{\left({ρ}_{s}\right)}_{s}} {η}_{s} \left(k\right)$ ${\left(Δ{x}_{ij}\left(k\right)\right)}_{l + 1} \approx {\left({η}_{ij}\left(k\right)\right)}_{l + 1}$ where *l* is the number of iterations; in this case a maximum number of 100 iterations is set, sufficient to eliminate the artifacts.

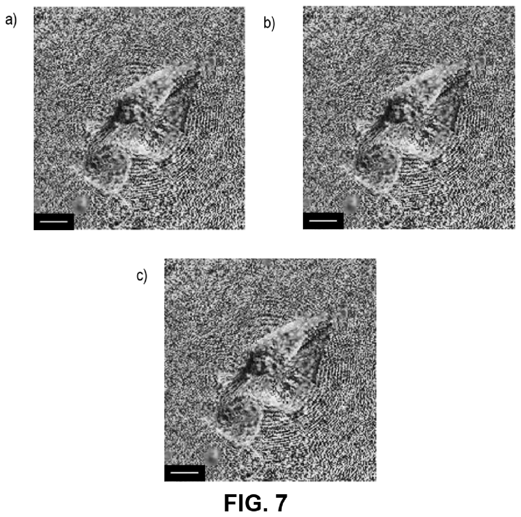

In both cases, the correlation matrices are then calculated again with the corrected fluctuations value. The result is shown in figure 7, which shows that there is no longer any correlation with any of the substrates *ηₛ*.

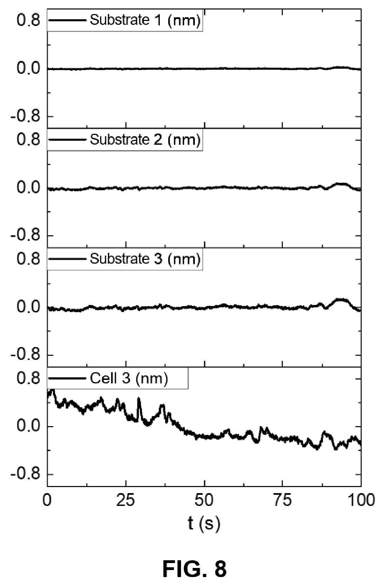

The average signals are then represented with the corrected fluctuations value. The result is shown in figure 8, where it can be observed that the tilt movement has disappeared from the substrates and regions of interest. In this way, the signals corresponding to the cells in the regions of interest no longer have the same shape as those corresponding to the substrates. Nevertheless, there is a remnant of shaped noise on the substrates, but with an amplitude smaller than the average signals from the cells.

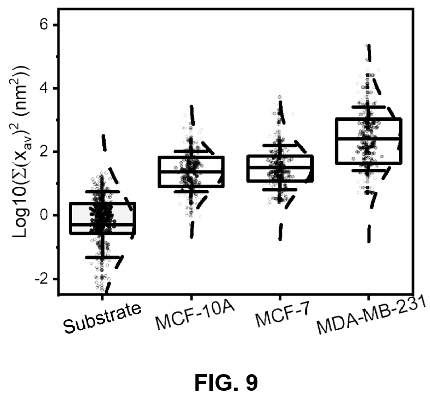

Finally, the quadratic sum of the average signal is calculated again using the corrected fluctuations value. Figure 9 shows the results for three cell lines and for the substrates. In this case, a clear distinction between the distribution of the cells (regions of interest) and those of the substrates can already be seen.

## Claims

1. An image analysis method for determining intracellular fluctuations comprising the steps of:
- obtaining a set of *N_{seg}* images (k) at time intervals (Δ*t*);
- determining one or more substrates (s), coinciding with regions without cells;
- defining one or more regions of interest, coinciding with regions comprising cells;
- measuring and spatially averaging each signal corresponding to the one or more substrates (*ηₛ*) as follows: ${η}_{s} \left(k\right) ≡ {η}_{s} \left(kΔt\right)$
- temporally averaging (*x̅ᵢ̅ⱼ̅*) the measured signals (*xᵢⱼ*(*k*)) of the regions of interest;
- calculating the fluctuations of the measured signals (Δ*xᵢⱼ*(*k*)) as: $Δ {x}_{ij} \left(k\right) = {x}_{ij} \left(k\right) - \overline{{x}_{ij}}$
- defining noise fluctuations (*η_{inc}*) as a linear combination of average signals from a set of substrates: ${η}_{inc} \left(k\right) = {\sum }_{s = 1}^{{N}_{s}} {α}_{ij , s} {η}_{s} \left(k\right)$ where *Nₛ* is the number of substrates, *αᵢⱼ* are coefficients that modulate the amplitude of the fluctuations of each substrate present in each pixel;
- calculating the correlation of the fluctuations of the measured signal (Δ*xᵢⱼ*(*k*)) with the substrate s (*ρᵢⱼ*)*ₛ* as follows: ${\left({ρ}_{ij}\right)}_{s} = {\sum }_{k = 1}^{{N}_{seg}} Δ {x}_{ij} \left(k\right) {η}_{s} \left(k\right)$
- obtaining the coefficients *αᵢⱼ* through the system of equations: ${\left({ρ}_{ij}\right)}_{s} = {\sum }_{m = 1}^{{N}_{s}} {α}_{ij , m} {\sum }_{k = 1}^{{N}_{seg}} {η}_{s} \left(k\right) {η}_{m} \left(k\right)$ where the coefficient m lists the substrates present and *ηₘ* (*k*) is the spatial average of the substrate m;
- calculating a corrected fluctuations value (*ηᵢⱼ*(*k*)) as:
${η}_{ij} \left(k\right) = Δ {x}_{ij} \left(k\right) - {\sum }_{m = 1}^{{N}_{s}} {α}_{ij , m} {η}_{m} \left(k\right)$

2. The image analysis method according to claim 1, wherein in the step of obtaining the coefficients *αᵢⱼ,* said coefficients *αᵢⱼ* are approximated as: ${α}_{ij , s} \approx \frac{{\left({ρ}_{ij}\right)}_{s}}{{\left({ρ}_{s}\right)}_{s}}$ where (*ρₛ*)*ₛ* is the correlation of *ηₛ* with itself and is as follows: ${\left({ρ}_{s}\right)}_{s} = {\sum }_{k = 1}^{{N}_{seg}} {η}_{s} \left(k\right) {η}_{s} \left(k\right)$ and the step of calculating a corrected fluctuations value (*ηᵢⱼ*(*k*)) is carried out iteratively as: ${\left({η}_{ij}\left(k\right)\right)}_{l + 1} \approx {\left(Δ{x}_{ij}\left(k\right)\right)}_{l} - {\sum }_{s = 1}^{{N}_{s}} \frac{{\left({\left({ρ}_{ij}\right)}_{s}\right)}_{l}}{{\left({ρ}_{s}\right)}_{s}} {η}_{s} \left(k\right)$ where the value of Δ*xᵢⱼ* is updated as coinciding with the value of *ηᵢⱼ* in the previous iteration.

3. The image analysis method according to any of claims 1 to 2, wherein the step of defining a set of regions of interest comprises applying a set of mobile rigid masks in the regions comprising cells.

4. The image analysis method according to any of claims 1 to 3, wherein the analysed images present tilt or vibrations that give rise to the term noise fluctuations.

5. The image analysis method according to any of claims 2 to 4, wherein the number of iterations is 100.

6. The image analysis method according to any of claims 1 to 5, further comprising a step, subsequent to the step of calculating a corrected fluctuations value, of calculating the correlation matrices with the substrates.

7. The image analysis method according to any of claims 1 to 6, further comprising a step of spatially averaging (*η̅ᵢ̅ⱼ̅*) the corrected fluctuations value calculated for each pixel.

8. The image analysis method according to claim 7, further comprising a step, subsequent to the step of spatially averaging (*η̅ᵢ̅ⱼ̅*) the corrected fluctuations value, to represent the average signals from the corrected fluctuations value.

9. The image analysis method according to any of claims 1 to 8, wherein the set of substrates are three substrates, and *Nₛ* = 3.

10. An image analysis system for determining intracellular fluctuations comprising:
- a quantitative microscope (1);
- an incubator (2) intended to comprise a set of cells, defining a substrate, as regions where there are no cells, and regions of interest, as regions where there are cells;
- a processing module connected to the quantitative microscope (1) configured to determine intracellular fluctuations by carrying out the steps of any of claims 1 to 9.

11. The image analysis system according to claim 10, wherein the microscope (1) is a digital holographic microscope (1).

12. The image analysis system according to any of claims 10 to 11, wherein the microscope (1) comprises a cantilever support (3) with a supported end and an unsupported end, and wherein the support (3) is configured to support the incubator (2) at its unsupported end.

13. The image analysis system according to claim 12, wherein the support (3) comprises a cantilever plate (4).
